(19) Europäisches Patentamt
European Patent Office
Office européen des brevets

(11) Veröffentlichungsnummer: **0 001 467**
**B1**

(12) **EUROPÄISCHE PATENTSCHRIFT**

(45) Veröffentlichungstag der Patentschrift: **21.10.81**

(51) Int. Cl.³: **C 08 G 18/80**, C 09 D 3/72

(21) Anmeldenummer: **78200219.0**

(22) Anmeldetag: **02.10.78**

(54) **Lagerstabile Einbrennlacke auf Basis imidazolinblockierter Polyisocyanate.**

(30) Priorität: **05.10.77 DE 2744782**

(43) Veröffentlichungstag der Anmeldung:
**18.04.79 Patentblatt 79/8**

(45) Bekanntmachung des Hinweises auf die Patenterteilung:
**21.10.81 Patentblatt 81/42**

(84) Benannte Vertragsstaaten:
**BE DE FR GB LU NL**

(56) Entgegenhaltungen:
**keine**

(73) Patentinhaber: **CHEMISCHE WERKE HÜLS AG**
**Postfach 1320**
**D-4370 Marl 1 (DE)**

(72) Erfinder: **Gras, Rainer, Dr.**
**An der Ziegelei 91**
**D-4690 Herne 2 (DE)**
Erfinder: **Obendorf, Johann, Dr.**
**Pastorsbusch 40**
**D-4270 Dorsten (DE)**
Erfinder: **Wolf, Elmar, Dr.**
**Am Böckenbusch 3a**
**D-4690 Herne 2 (DE)**

(74) Vertreter: **Steil, Hanna, Dipl.-Chem.**
**RSP PATENTE-PB 40 Holsterhauser Strasse 160**
**Postfach 2840**
**D-4690 Herne 2 (DE)**

**EP 0 001 467 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# Lagerstabile Einbrennlacke auf Basis imidazolinblockierter Polyisocyanate

Zur Herstellung von bei gewöhnlicher Temperatur haltbaren Mischungen aus Polyisocyanaten und Polyhydroxyverbindungen verwendet man bekanntlich solche Polyisocyanate, deren reaktionsfähige Gruppen durch Umsetzung mit monofunktionellen Verbindungen verschlossen sind und die allgemein als blockierte, verkappte oder maskierte Polyisocyanate bezeichnet werden. Derartige Produkte werden in Liebigs Annalen Bd. 562, S. 205—229, beschrieben. Durch Einwirkung höherer Temperaturen spalten sie wieder in ihre Ausgangsstoffe zurück, wobei die nun freiwerdenden Isocyanatgruppen ihrerseits mit den in der Reaktionsmischung vorliegenden Polyhydroxyverbindungen reagieren können.

Ein solches bei Raumtemperatur lagerstabiles Einkomponenten-Einbrennlack-System besteht beispielsweise aus einem in einem hochsiedenden Lacklösungsmittel gelösten ε-Caprolactam blockierten Addukt des 3-Isocyanatomethyl-3,5,5-trimethylcyclohexylisocyanat und einem hydroxylgruppenhaltigen Polyester auf Basis von überwiegend aromatischen Dicarbonsäuren und einem Gemisch aus Diolen und Triolen und wird in der DT—OS 23 46 818 beschrieben. Die Härtungsgeschwindigkeiten eines derartigen Systems sind jedoch für bestimmte Anwendungen zu langsam. Es gelingt zwar durch Katalysatoren, wie tertiäre Amine oder organische Zinnverbindungen, die Härtungsgeschwindigkeiten wesentlich zu steigern, doch wirken derartige Zusätze, besonders bei Anwesenheit von Verbindungen, die mit Isocyanaten zu reagieren vermögen, auch bereits in der Kälte auf die verkappten Polyisocyanate in der Weise ein, daß sie auch bei gewöhnlicher Temperatur die Abspaltung der monofunktionellen Verbindung bewirken und so die Mischung instabil machen.

Es wurde nun überraschenderweise gefunden, daß man sowohl die Härtungsdauer als auch die Härtungstemperatur der Einbrennlacke auf der Basis eines Gemisches aus hydroxylgruppenhaltigen Polymeren, blockierten Polyisocyanaten und organischen Lösungsmitteln sowie gegebenenfalls üblichen Lackzusätzen erniedrigen kann, wenn solche Einbrennlacke aus

*a.* 40—70 Gew.-% hydroxylgruppenhaltigen Polymeren mit Hyroxylzahlen zwischen 40 und 240 und mit Imidazolinen der allgemeinen Formel

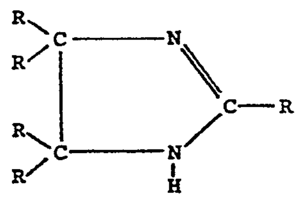 blockierte Polyisocyanate,

worin R gleiche oder verschiedene Substituenten aus der Gruppe Wasserstoff, Alkyl-, Cycloalkyl-, Aralkyl-, Alkaryl und Arylrest sind, wobei die Komponenten in solcher Menge eingesetzt werden, daß auf ein Hydroxylgruppenäquivalent 0,8—1,2 NCO-Gruppenäquivalente kommen,

*b.* 0—2 Gew.% Vernetzungskatalysator und

*c.* 30—60 Gew.% organischem Lösungsmittel oder Lösungsmittelgemisch bestehen wobei sich die Prozentzahlen auf 100 addieren, sowie zusätzlich

*d.* 0—65 Gew.% Pigmenten und/oder Füllstoffen,

*e.* 0—5 Gew.% Farbstoffen und gegebenenfalls

*f.* 0,1—3 Gew.% Verlaufmittel, Glanzverbesserer, Antioxidantien und/oder Hitzestabilisatoren enthalten.

Diese Effekte werden durch den Ersatz des ε-Caprolactams durch die genannten Imidazoline als Blockierungsmittel erzielt.

Die Imidazolin-blockierten Polyisocyanate sind mit den hydroxylgruppenhaltigen Polymeren gut verträglich und liefern in organischen Lösungsmitteln homogene Lösungen, die sich sehr gut zur Anwendung als Einbrennlack eignen. Die erfindungsgemäßen härtbaren Gemische sind bei Zimmertemperatur sehr gut lagerstabil, d.h. sie verändern sich weder physikalisch noch chemisch, d.h. die Bestandteile der Einbrennlacke reagieren bei Raumtemperatur nicht. Die Aushärtung der erfindungsgemäßen Lacke erfolgt je nach Anwendung im Temperaturintervall von 140—350°C innerhalb von 25 Minuten bis herunter zu 15 Sekunden. Es erfolgt bei der Härtung eine Deblockierung der Härter in die cyclischen Amidine und die Polyisocyanate. Die freigewordenen NCO-Gruppen reagieren dann mit den OH-Gruppen des Polyesters über eine NCO/OH-Reaktion unter Ausbildung von Urethanbindungen. Die gehärteten Überzüge bzw. Beschichtungen zeichnen sich durch sehr gute chemische und mechanische Eigenschaften sowie Chemikalienbeständigkeit aus.

Als erfindungsgemäß einsetzbare hydroxylgruppenhaltige Polymere werden hydroxylgruppenhaltige Polyester aus aliphatischen, cycloaliphatischen und/oder aromatischen Polycarbonsäuren mit Hydroxylzahlen zwischen 40 und 240 bevorzugt. Für diesen Einsatz-zweck sollten die Polyester weiter einen niedrigen Glasumwandlungspunkt besitzen, d.h. zwischen <20°C und >—25°C, vorzugsweise <0°C. Die geeigneten Polyester besitzen darüberhinaus mehr als 1 OH-Gruppe im Durchschnitt pro Molekül.

Geeignete aliphatische, cycloaliphatische und aromatische Polycarbonsäuren sind, wobei die aromatischen ein- oder mehrkernig sein können, z.B. Oxalsäure, Bernsteinsäure, Glutarsäure, 2,2-Dimethylglutarsäure, Adipinsäure, 2,2,4- bzw. 2,4,4-Trimethyladipinsäure, Sebacinsäure, Dodecandicarbonsäure, Terephthalsäure, Methylterephthalsäure, 2,5- und 2,6-Dimethylterephthalsäure, Chlorterephthalsäure, 2,5-Dichlorterephthalsäure, Fluorterephthalsäure, Isophthalsäure, Phthalsäure, Trimellithsäure, Naphthalindicarbonsäure, insbesondere die 1,4-, 1,5-, 2,6- und 2,7-Isomeren, Phenylendiessigsäure, 4-Carboxyphenoxyessigsäure, m- und p-Terphenyl-4,4''-dicarbonsäure, Dodecahydrodiphensäure, Tetrahydrophthalsäure, Hexahydrophthalsäure, Hexahydroterephthalsäure, 4,4'-Diphensäure, 2,2'- und 3,3'-Dimethyl-4,4'-diphensäure, 2,2'-Dibrom-4,4'-diphensäure, Bis-(4-carboxyphenyl)-methan, 1,1- und 1,2-Bis-(4-carboxyphenyl)-äthan, 2,2-Bis-(4-carboxyphenyl)-propan, 1,2-Bis-(4-carboxyphenoxy)-äthan, Bis-4-carboxyphenyläther, Bis-4-carboxyphenylsulfid, Bis-4-carboxyphenylketon, Bis-4-carboxyphenylsulfoxid, Bis-4-carboxyphenylsulfon, 2,8-Dibenzofurandicarbonsäure, 4,4'-Stilbendicarbonsäure und Octadecahydro-m-terphenyl-4,4''-dicarbonsäure u.a. Auch ungesättigte Säuren, die sich von vorgenannten Säuren ableiten lassen, können verwendet werden. Selbstverständlich können anstelle der genannten Säuren auch deren funktionelle Derivate, wie Anhydride, Ester u.a. eingesetzt werden. Es können auch Mischungen der vorgenannten Verbindungen verwendet werden.

Zur Herstellung der hydroxylgruppenhaltigen Polyester werden als Alkoholkomponente bevorzugt Diole verwendet. Die teilweise Mitverwendung von anderen Polyolen, z.B. Triolen, ist möglich; Beispiele für geeignete Diole sind: Äthylenglykol, Propylenglykol, wie 1,2- und 1,3-Propandiol sowie 2,2-Dimethylpropandiol-(1,3), Butandiole, wie Butandiol-(1,3) bzw. (1,4), Hexandiole, z.B. Hexandiol-(1,6), 2,2,4-Trimethylhexandiol-1,6), 2,4,4-Trimethylhexandiol-(1,6), Heptandiol-(1,7), Thiodiglykol, Octadecandiol-(1,18), 2,4-Dimethyl-2-propylheptandiol-(1,3), Buten- oder Butindiol-(1,4), Diäthylenglykol, Triäthylenglykol, cis- und trans- 1,4-Cyclohexandimethanol, 1,4-Cyclohexandiole, 2,2-Bis-(4-hydroxycyclohexyl)-propan, bisoxyäthyliertes 2,2-Bis-(4-hydroxyphenyl)-propan; für andere Polyole: Glycerin, Hexantriol-(1,2,6), 1,1,1,-Trimethylolpropan, 1,1,1-Trimethyloläthan, Pentaerythrit, u.a. Es können auch Mischungen der vorgenannten Verbindungen verwendet werden.

Bei der Herstellung der Polyester wird das Polyol in solchen Mengen eingesetzt, daß auf 1 Carboxylgruppenäquivalent mehr als 1 OH-Gruppenäquivalent kommen, so daß Polyester der beschriebenen Charakteristika erhalten werden. Die erhaltenen Polyester stellen höherviskose Flüssigkeiten bzw. Weichharze dar.

Die hydroxylgruppenhaltigen Polyester können in bekannter und üblicher Weise, d.h. durch Verestern oder Umestern, gegebenenfalls in Gegenwart von Katalysatoren, hergestellt werden. Dazu bieten sich insbesondere die beiden nachstehenden Verfahren an.

Im ersten Fall geht man beispielsweise von mineralsäurefreier Säure aus, die gegebenenfalls durch Umkristallisation zu reinigen ist. Das Verhältnis der Äquivalente von Säure zu Alkohol richtet sich naturgemäß nach der gewünschten Molekülgröße und nach der erforderlichen OH—Zahl. Die Reaktionskomponenten werden nach Zugabe von 0,005—0,5 Gew.%, vorzugsweise 0,05—0,2 Gew.%, eines Katalysators, z.B. Zinnverbindungen, wie Di-n-butylzinnoxid, Di-n-butylzinndiester u.a., oder Titanester, insbesondere Tetraisopropyltitanat, in einer geeigneten Apparatar unter Durchleiten eines Inertgases, z.B. Stickstoff, erhitzt. In Abhängigkeit der eingesetzten Säure kommt es zur ersten Wasserabspaltung. Das Wasser wird destillativ aus dem Reaktionsgemisch entfernt. Innerhalb von mehreren Stunden wird die Reaktionstemperatur bis auf 240°C erhöht. Das Reaktionsmedium bleibt bis kurz vor Ende der vollständigen Veresterung meist inhomogen. Nach ca. 24 h ist die Reaktion abgeschlossen.

Bei dem zweiten Verfahren geht man beispielsweise vom Dimethylester oder einem anderen Ester aus und estert unter Durchleiten eines Inertgases, z.B. trockenem Stickstoff, mit den gewünschten Alkoholkomponenten um. Als Umesterungskatalysatoren können wieder Titanester, Dialkylzinnester oder Dialkylzinnoxide in Konzentrationen von 0,005—0,5 Gew.% eingesetzt werden. Nach dem Erreichen von ca. 120°C kommt es meist zur ersten Methanolabspaltung. Innerhalb von mehreren Stunden wird die Temperatur auf 220—230°C gesteigert. Je nach gewähltem Ansatz ist die Umesterung nach 2—24 h abgeschlossen.

Die erfindungsgemäß verwendeten, mit Imidazolinen der beschriebenen allgemeinen Formel blockierten Polyisocyanate können durch Umsetzung bei Temperaturen von 0—150°C, vorzugsweise bei 80—120°C, hergestellt werden, wobei die Polyisocyanate und die Imidazoline in solchen Mengen eingesetzt werden, daß auf eine Isocyanatgruppe 0,6—1,1, vorzugsweise 0,8—1,0 Mol, cyclisches Amidin kommen. Die angewendete Reaktionstemperatur sollte jedoch unterhalb der Aufspalttemperatur der Addukte liegen.

Die Umsetzung kann sowohl in Lösungsmitteln, in der Schmelze als auch in im Überschuß vorgelegten Polyisocyanat durchgeführt werden.

Als Ausgangsverbindungen, die zur Blockierung mit den Imidazolinen eingesetzt werden können, eignen sich beispielsweise Polyisocyanate, insbesondere Diisocyanate, wie aliphatische, cycloaliphatische, araliphatische, d.h. arylsubstituierte aliphatische, und/oder aromatische Diisocyanate, wie sie beispielsweise in Houben-Weyl, Methoden der organischen Chemie, Band 14/2, S. 61—70, und in dem Artikel von W. Siefken in Justus Liebigs Annalen der Chemie *562,* 75—136, beschrieben werden, wie 1,2-Äthylendiisocyanat, 1,4-Tetramethylendiisocyanat, 1,6-Hexamethylendiisocyanat, 2,2,4- bzw.

2,4,4-Trimethyl-1,6-hexamethylendiisocyanat (TMDI), Dodecandiisocyanat-1,12,$\omega,\omega'$-Diisocyanatodipropyläther, Cyclobutan-1,3-diisocyanat, Cyclohexan-1,3- und 1,4-diisocyanat, 3-Isocyanatomethyl-3,5,5-trimethylcyclohexylisocyanat, welches auch als Isophorondiisocyanat bezeichnet und mit IPDI abgekürzt wird, Decahydro-8-methyl-(1,4-methano-naphthalin-2 (oder 3) 5-ylendimethylen-diisocyanat, Hexahydro-4,7-methano-indan-1 (oder 2) 5 (oder 6) ylendimethylen-diixocyanat, Hexahydro-4,7-methanoindan-1 (oder 2) 5 (oder 6) ylen-diisocyanat, Hexahydro-1,3- bzw. 1,4-phenylendiisocyanat, 2,4- und 2,6-Hexahydrotoluylendiisocyanat, Perhydro-2,4'- und/oder -4,4'-diphenylmethan-diisocyanat, $\omega,\omega'$-Diisocyanato-1,4-diäthylbenzol, 1,4-Phenylendiisocyanat, 4,4'-Diisocyanatodiphenyl, 4,4'-Diisocyanato-3,3-dichlor-diphenyl, 4,4'-Diisocyanato-3,3'-dimethoxy-diphenyl, 4,4'-Diixocyanato-3,3'-dimethyl-diphenyl, 4,4'-Diisocyanato-3,3'-diphenyl-diphenyl, 4,4'-Diisocyanatodiphenylmethan, Naphthylen-1,5-diisocyanat, Toluylendiisocyanate, Toluylen-2,4- bzw. 2,6-diisocyanat, N,N'-(4,4'-Dimethyl-3,3'-diisocyanatodiphenyl)-uretdion, m-Xylylen-diisocyanat, aber auch die Triisocyanate, wie 2,4,4'-Triisocyanato-diphenyläther, 4,4',4''-Triisocyanato-triphenylmethan, Tris-(4-isocyanatophenyl)-thiophosphat, sowie beliebige Gemische dieser Verbindungen. Weitere geeignete Isocyanate werden in dem genannten Artikel in den Annalen auf Seite 122 f beschrieben.

Besonders bevorzugt werden in der Regel die technisch leicht zugängigen aliphatischen, cycloaliphatischen oder aromatischen Diisocyanate und besonders das 3-Isocyanatomethyl-3,5,5-trimethylcyclohexylisocyanat und 2,4- (bzw. 2,6-) Toluylendiisocyanat sowie deren isomere Gemische.

Neben den monomeren Polyisocyanaten können als Ausgangsstoffe für die Blockierung mit den nachstehend ausführlich beschriebenen Imidazolinen selbstverständlich auch die dimeren und trimeren Formen der Polyisocyanate, wie Uretdionen, Biuret und Isocyanurate und Urethanaddukte eingesetzt werden, die nach bekannten Methoden herstellbar sind.

Unter Polyisocyanaten im Sinne der vorliegenden Erfindung werden auch solche verstanden, die vor der Blockierung mit den Imidazolinen einer Umsetzung zur Molekülvergrößerung mit den in der Isocyanatchemie gebräuchlichen sogenannten Kettenverlängerungsmitteln, wie Wasser, Polyolen, Polyaminen u.a., unterworfen wurden, wobei das bi- oder trifunktionelle Kettenverlängerungsmittel, also solche mit gegenüber Isocyanatgruppen reaktionsfähigen Gruppen, wie Hydroxyl- und/oder Aminogruppen tragende Verbindungen, in solchen Mengen verwendet wird, daß das resultierende neue Isocyanat im Durchschnitt mindestens 2 Isocyanatgruppen trägt. Bei Verwendung von Wasser als Kettenverlängerungsmittel resultieren Polyisocyanate mit einer oder mehreren Harnstoffgruppierungen.

Geeignete Polyole sind beispielsweise Diole und Triole bzw. andere Polyole, die auch zur Herstellung der hydroxylgruppenhaltigen Polyester verwendet werden können.

Von den für die Kettenverlängerung bzw. Molekülvergrößerung geeigneten Polyaminen sollen beispielsweise das Äthylendiamin-1,2, Propylendiamin-1,2 und -1,3, Butylendiamin-1,2, -1,3 und -1,4 sowie die Hexamethylendiamine, die auch eine oder mehrere $C_1$—$C_4$ -Alkylreste tragen können, wie 2,2,4- bzw. 2,4,4-Trimethylhexamethylendiamin-1,6 u.a., und 3-Aminomethyl-3,5,5-trimethylcyclohexylamin, welches auch als IPD bezeichnet wird, genannt werden.

Geeignete Imidazolin-Derivate im Sinne der vorliegenden Erfindung, die der früher beschriebenen allgemeinen Formel entsprechen, sind beispielsweise solche mit gegebenenfalls arylsubstituierten Alkylresten, mit gegebenenfalls alkylsubstituierten Arylresten, wie 2- bzw. 4-Methylimidazolin, 2,4-Dimethylimidazolin, 2-Methyl-4-(n-butyl)-imidazolin, 2-Äthylimidazolin, 2-Äthyl-4-methylimidazolin, 2-Benzyl-imidazolin, 2-Phenyl-imidazolin, 2-Phenyl-4-methyl-imidazolin, 2-Phenyl-4-(N-morpholinylmethyl)-imidazolin, 2-(o-Tolyl)-imidazolin, 2-(p-Tolyl)-imidazolin, u.a.m. Es können auch Gemische der Imidazolin-Derivate erfindungsgemäß eingesetzt werden. Dieses ist besonders dann zweckmäßig, wenn blockierte Isocyanate mit niedrigen Schmelzpunkten bzw. -bereichen benötigt werden.

Die erfindungsgemäß einsetzbaren Imidazolin-Derivate können nach bekannten Verfahren aus gegebenenfalls substituierten Diaminen und aliphatischen oder aromatischen Mononitrilen in Gegenwart von elementarem Schwefel oder Sulfurylchlorid als Katalysator hergestellt werden.

Die Blockierung kann, wie bereits erwähnt, auch in Lösungsmitteln durchgeführt werden. Als Lösungsmittel für diese Reaktion kommen nur solche infrage, die mit den Isocyanatgruppen nicht reagieren, beispielsweise Ketone, wie Aceton, Methyläthylketon, Methylisobutylketon, Cyclopentanon, Cyclohexanon, Iosphoron u.a.; Aromaten, wie Benzol, Toluol, Xylole, Chlorbenzol, Nitrobenzol u.a.; cyclische Äther, wie Tetrahydrofuran, Dioxan u.a.; Ester, wie Methylacetat, n-Butylacetat, u.a.; aliphatische Chlorkohlenwasserstoffe, wie Chloroform, Tetrachlorkohlenstoff u.a. sowie aprotische Lösungsmittel, wie Dimethylformamid, Dimethylacetamid, Dimethylsulfoxid usw. Für die Blockierungsreaktion werden zweckmäßigerweise die gleichen Lösungsmittel bzw. -gemische verwendet, die später für die Herstellung des Einbrennlackes eingesetzt werden, weil dadurch die Entfernung des Lösungsmittels in dieser Herstellungsphase entfällt.

Wenn das Blockierungsmittel im Verhältnis von $\geqq$ 1 zur Anzahl der Isocyanatgruppen eingesetzt wird, werden die Reaktionsmischungen so lange bei den angegebenen Temperaturen gehalten, bis der NCO—Gehalt der Reaktionsmischung auf Werte unter 0,2% NCO abgesunken ist, für $<1$ bis zur Erreichung eines konstanten NCO—Wertes.

Ebenfalls erfindungsgemäß einsetzbar sind solche blockierten Polyisocyanate, die durch nachträgliche Umsetzung einer Gruppe von blockierten Polyisocyanaten erhalten werden können, nämlich

solche, bei denen Imidazoline in unterstöchiometrischen Mengen eingesetzt worden sind, d.h. das Verhältnis cyclisches Amidin zu Isocyanatgruppen war <1:1, mit den gleichen Kettenverlängerungsmitteln, die bereits früher als Mittel zur Molekülvergrößerung beschrieben worden sind. Die Umsetzung erfolgt ebenfalls bei Temperaturen im Bereich von 20—150°C, vorzugsweise 80—120°C, jedoch immer unterhalb der Deblockierungstemperatur des blockierten Polyisocyanats. Durch diese blockierten Polyisocyanate lassen sich Einbrennlacke herstellen, die in sehr weiten Grenzen praktische Erfordernisse abzudecken vermögen. Diese Verfahrensvariante ist besonders für Polyisocyanate mit unterschiedlich reaktiven NCO—Gruppen von Interesse.

So lassen sich durch Wechsel der Reihenfolge Adduktbildung/Blockierung blockierte Polyisocyanate mit unterschiedlicher Reaktivität, Schmelzbereich und Struktur erhalten.

Bei Blockierung von Diisocyanaten und gegebenenfalls vor- bzw. nachheriger Umsetzung mit 2-wertigen Kettenverlängerungsmitteln werden Verbindungen erhalten, die durch die nachstehende Formel beschrieben werden können:

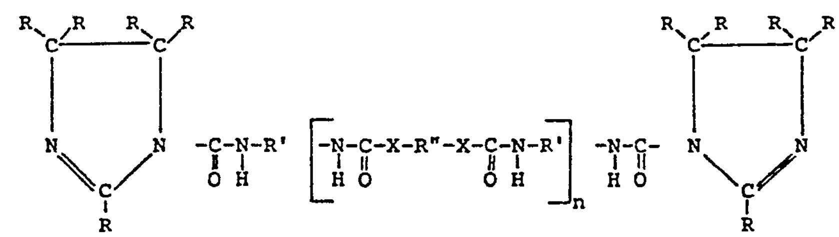

In der vorstehenden allgemeinen Formel können bedeuten: n 0 oder 1, X O, S oder eine NH—Gruppe, R ein gleicher oder verschiedener Rest aus der Gruppe Wasserstoff, Alkyl-, Cycloalkyl-, Aralkyl-, Alkaryl und Arylrest R′ ein Alkylen-, Cycloalkylen-, wie der

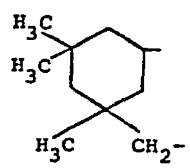

-Rest oder Arylenrest und R″ ein gegebenenfalls durch eine oder mehrere Alkylreste, wobei mehrere auch Bestandteil eines cycloaliphatischen Ringes sein können, substituierter, gesättigter oder ungesättigter Alkylenrest mit 2—18 C-Atomen, der gegebenenfalls ein oder mehrere Sauerstoff- oder Schwefel-atome in der Kohlenwasserstoffkette enthalten kann, oder ein Cycloalkylenrest ist.

Für die erfindungsgemäßen Einkomponenten-Einbrennlacke geeignete Lösungsmittel sind solche, deren Siedepunkt mindestens bei 100°C oder höher liegt. Die Siedetemperatur des eingesetzten Lösungsmittels ist von den jeweiligen Einbrenn-Temperaturen abhängig. Je höher diese liegen, desto höher können auch die Siedetemperaturen der zu verwendenden Lösungsmittel sein. Als Lösungsmittel kommen folgende Verbindungen infrage:

Aromatische Kohlenwasserstoffe, wie Toluol, Xylole (auch technische Gemische), Tetrahydronaphthalin, Cumol u.a.; Ketone, wie Methylisobutylketon, Diisobutylketon, Isophoron, und Ester, wie n-Hexylacetat, Äthylglykolacetat, n-Butylglykolacetat usw. Die genannten Verbindungen können auch als Gemische eingesetzt werden.

Zur Verbesserung der Verlaufeigenschaften der Lacke werden bei der Zubereitung sogenannte Verlaufmittel zugesetzt. Bei diesen Mitteln kann es sich um chemische Verbindungen bzw. deren Gemische sehr unterschiedlicher chemischer Art handeln, z.B. polymere oder monomere Verbindungen, Acetale, wie

Polyvinylformal, Polyvinylacetal, Polyvinylbutyral,
Polyvinylacetobutyral bzw.
Di-2-äthylhexyl-i-butyraldehyd-acetal,
Di-2-äthylhexyl-n-butyraldehyd-acetal,
Diäthyl-2-äthylhexanol-acetal,
Di-n-butyl-2-äthyl-hexanol-acetal,
Di-i-butyl-2-äthyl-hexanol-acetal,
Di-2-äthylhexyl-acetaldehyd-acetal u.a.,

Äther, wie die polymeren Polyäthylen- und Polypropylenglykole, Mischpolymerisate aus n-Butylacrylat und Vinylisobutyläther, Keton-Aldehyd-Kondensationsharze, feste Siliconharze, Siliconöle oder auch Gemische von Zinkseifen, von Fettsäuren und aromatischen Carbonsäuren u.ä. Derartige Verlaufmittel können in den Ansätzen in Mengen bis zu 3,0 Gew.%, bezogen auf die Gesamtmenge Bindemittel (Polyester + blockiertes Polyisocyanat), Vernetzungskatalysator und Lösungsmittel bzw. -gemisch, enthalten sein.

Die Umsetzung der hydroxylgruppenhaltigen Polyester mit den durch Deblockierung freigesetzten Polyisocyanaten kann durch Katalysatoren in den angegebenen Mengen beschleunigt werden.

Beispiele für geeignete Katalysatoren sind einmal organische Sulfonsäuren, p-Toluolsulfonsäure, zum anderen organische Zinnverbindungen, wie Di-n-butylzinndilaurat.

Die anderen Bestandteile des Einbrennlacks, wie Farbstoffe, Pigmente, Füllstoffe, wie Titandioxid, Ruß, organische und anorganische Buntpigmente, Talkum, Schwerspat u.ä., Thixotropiermittel, UV- und Oxidationsstabilisatoren u.a. können, bezogen auf die Menge Bindemittel (Polyester + blockiertes Polyisocyanat), Vernetzungskatalysator und Lösungsmittel bzw. -gemisch, innerhalb des angegebenen Bereichs schwanken.

Die erfindungsgemäßen Einkomponenten-Einbrennlacke können in geeigneten Mischaggregaten, z.B. Rührkesseln, durch einfaches Vermischen der drei Lackkomponenten: hydroxylgruppenhaltiger Polyester, blockiertes Polyisocyanat und hochsiedendes Lösungsmittel bzw. -gemisch bei 80—100°C hergestellt werden. Auch übliche Zuschlagstoffe, wie Pigmente, Verlaufmittel, Glanzverbesserer, Antioxidantien und Hitzestabilisatoren, können ebenfalls in einfacher Weise der Lacklösung zugesetzt werden.

Die Aufbringung des Einkomponenten-Einbrennlackes auf die zu überziehenden Körper kann nach bekannten Methoden geschehen.

Nach dem Aufbringen des Lackes nach einer der bekannten Methoden auf die zu lackierenden Gegenstände werden sie zur Aushärtung auf Temperaturen oberhalb der Aufspalttemperatur des Härtungsmittels, d.h. 140—350°C, vorzugsweise 200—300°C, erhitzt. Danach besitzt der resultierende Überzug die beschriebenen Vorteile.

Zur Beschichtung mit den erfindungsgemäßen Einkomponenten-Einbrennlacken eignen sich alle Substrate, die die angegebenen Härtungstemperaturen ohne Einbuße der mechanischen Eigenschaften vertragen, wie Metallflächen, Glasflächen u.ä.

Die erfindungsgemäßen Lacke finden vor allem Anwendung in der Coil-Coating-Lackierung, für außenwitterungsbeständige Ein- und Zweischicht-Lackierungen.

Die erfindungsgemäßen Einbrennlacke und deren Anwendung werden durch die nachstehenden Beispiele illustriert:

### Beispiel 1

*1a. Herstellung des blockierten Isocyanats:*

Zu 444 Gew.-Teilen IPDI wurden bei 80°C unter guter Rührung 106 Gew.-Teile Diäthylenglykol langsam zugegeben. Nach erfolgter Diäthylenglykol-Zugabe wurde noch 2 h bei 80°C erhitzt. Der NCO—Gehalt des IPDI/Diäthylenglykol-Addukts betrug danach 15,1%.

*1b.* Zu 556 Gew.-Teilen des in 1a hergestellten Addukts aus 2 Molen IPDI und 1 Mol Diäthylenglykol wurden bei 120°C portionsweise 292 Gew.-Teile 2-Phenylimidazolin so zugegeben, daß die Temperatur nicht über 125°C anstieg. Nach Beendigung der 2-Phenylimidazolin-Zugabe wurde das Reaktionsgemisch noch 1 h bei 120°C erhitzt. Das Reaktionsprodukt ist ein blaßgelbes Pulver mit einem Schmelzbereich von 100—106°C.

*1c. Herstellung des verwendeten hydroxylgruppenhaltigen Polyesters:*

7 Mol (1162 g) Isophthalsäure, 6 Mol (708 g) Hexandiol, 2 Mol (268 g) Trimethylolpropan wurden in einem 5 1-Dreihalskolben mit Rückflußkühler, Rührer und Thermometer aufgeschmolzen. Bei einer Temperatur von 160°C wurden 0,1 Gew.% Di-n-butylzinnoxid als Veresterungskatalysator zugesetzt. Innerhalb von ca. 4 h wurde die Sumpftemperatur langsam auf 185°C erhöht. Die weitere Temperaturerhöhung auf maximal 230°C Sumpftemperatur erfolgte innerhalb von weiteren 8 h, wobei die Aufheizgeschwindigkeit sich an der Wasserabscheidung orientierte. Der Polyester wurde anschließend auf ca. 200°C abgekühlt und durch Evakuierung auf ca. 1 mm Hg weitgehend von flüchtigen Anteilen befreit. Während der gesamten Kondensationszeit wurde das Sumpfprodukt gerührt. Ein trockener Stickstoffstrom von ca. 30 l/h sorgte für eine schnelle Entfernung des Wassers.

| | | |
|---|---|---|
| OH-Zahl | : | 105 mg KOH/g |
| Säure-Zahl | : | <1 |
| Glasumwandlungstemperatur (DTA) | : | −12 bis +5°C |
| mittleres Molekulargewicht | : | 2400 |

Die mittleren Molekulargewichte der Polyester wurden durch Endgruppenbestimmung ermittelt.

*1d. Herstellung des Klarlacks:*

42 Gew.-Teile der in 1b beschriebenen Verbindungen wurden in 28 Gew.-Teilen eines Lösungsmittelgemisches aus 1 Gew.-Teil o-Xylol und 3 Gew.-Teilen Äthylglykolacetat (EGA) gelöst. Zu dieser Lösung wurde unter gutem Rühren eine Lösung aus 53,3 Gew.-Teilen des hydroxylgruppenhaltigen Polyesters gemäß 1c und 35,5 Gew.-Teile eines Lösungsmittel-Gemisches aus 1 Gew.-Teil o-Xylol und 3 Gew.-Teilen EGA gegeben. Die so hergestellte Lacklösung veränderte sich beim Lagern nicht.

Mit dieser Lacklösung wurden 1 mm starke Stahlbleche beschichtet und in einem Umluftofen ausgehärtet.

| Einbrennbedingungen | Mechanische Daten | | | | | |
|---|---|---|---|---|---|---|
| Temp./Zeit | SD | HK | HB | GS | ET | KS indirekt |
| 180 10' | 40–50 | 180 | 111 | 0 | 11,2 | > 94 |
| 175 15' | 35–40 | 170 | 100 | 0 | 10,3 | > 94 |

Beispiel 2

*2a. Herstellung des blockierten Isocyanats:*

Zu 556 Gew.-Teilen des in Beispiel 1a beschriebenen IPDI-Diäthylenglykol-Addukts wurden bei 100°C 320 Gew.-Teile 2-Phenyl-4-methyl-imidazolin so zugegeben, daß die Temperatur des Reaktionsgemisches nicht über 110°C anstieg. Zur Vervollständigung der Reaktion wurde das Reaktionsgemisch noch 2 h bei 110°C erhitzt. Das Reaktionsprodukt ist ein weißes Pulver mit einem Schmelzbereich von 95—100°C. Im Reaktionsprodukt konnte NCO nicht mehr nachgewiesen werden.

*2b. Herstellung des Klarlacks:*

Die in 2a beschriebene Verbindung wurde im äquivalenten Verhältnis mit dem in 1c beschriebenen hydroxylgruppenhaltigen Polyester in o-Xylol/EGA (o-Xylol : EGA = 1:3) gelöst und wie in 1c weiterbehandelt.

Rezeptur: 100 Gew.-Teile blockiertes Isocyanat aus 2a
66,6 Gew.-Teile Polyester gemäß 1c
81,6 Gew.-Teile o-Xylol/EGA

| Einbrennbedingungen | Mechanische Daten | | | | | |
|---|---|---|---|---|---|---|
| Temp./Zeit | SD | HK | HB | GS | ET | KS indirekt |
| 180 15' | 40–50 | 180 | 111 | 0 | 10,8 | > 94 |

Beispiel 3

*3a. Herstellung des blockierten Isocyanats*

Zu 556 Gew.-Teilen des in Beispiel 1a beschriebenen Addukts aus 2 Mol IPDI und 1 Mol Diäthylenglykol wurden bei 100°C 196 Gew.-Teile 2,4-Dimethylimidazolin so zugetropft, daß die Temperatur nicht über 110°C anstieg. Nach erfolgter 2,4-Dimethylimidazolin-Zugabe wurde das Reaktionsgemisch noch weitere 2 h bei 110°C erhitzt. In dem so hergestellten Reaktionsprodukt konnte kein NCO mehr nachgewiesen werden. Das Reaktionsprodukt ist ein farbloses Pulver mit einem Schmelzbereich von 100—107°C.

*3b. Herstellung des Klarlacks:*

Die in 3a beschriebene Verbindung wurde im äquivalenten Verhältnis mit dem in 1c beschriebenen hydroxylgruppenhaltigen Polyester in o-Xylol/EGA gelöst und wie in 1c weiterbehandelt.

Rezeptur: 100 Gew.-Teile blockiertes Isocyanat aus 3a
66,6 Gew.-Teile o-Xylol/EGA
142,9 Gew.-Teile Polyester gemäß 1c
95,2 Gew.-Teile o-Xylol/EGA

| Einbrennbedingungen | Mechanische Daten | | | | | |
|---|---|---|---|---|---|---|
| Temp./Zeit | SD | HK | HB | GS | ET | KS indirekt |
| 240 2' | 45 | 180 | 100 | 0 | 10,5 | > 94 |

Beispiel 4

*4a. Herstellung des blockierten Isocyanats:*

Zu einer Mischung aus 222 Gew.-Teilen Isophorondiisocyanat (IPDI) und 300 Gew.-Teilen wasserfreiem Aceton wurden bei Raumtemperatur langsam 292 Gew.-Teile 2-Phenylimidazolin, die in 500 Gew.-Teilen wasserfreiem Aceton gelöst waren, zugetropft. Nach Beendigung der 2-Phenylimidazolin-Zugabe wurde 1 h bei 50°C erhitzt. Das Aceton wurde abdestilliert. Die letzten Reste an Aceton wurden durch Trocknung des Reaktionsprodukts bei 60°C im Vakuumtrockenschrank entfernt. Das mit 2-Phenylimidazolin blockierte IPDI stellt ein weißes Pulver dar mit einem Schmelzbereich von 98—106°C.

*4b. Herstellung des Klarlacks:*

Die in 4a beschriebene Verbindung wurde im äquivalenten Verhältnis mit dem in 1c beschriebenen hydroxylgruppenhaltigen Polyester in o-Xylol/EGA gelöst und wie in 1c weiterbehandelt.

Rezeptur: 100 Gew.-Teile blockiertes Isocyanat aus 4a
66,6 Gew.-Teile o-Xylol/EGA
207,2 Gew.-Teile Polyester gemäß 1c
138,1 Gew.-Teile o-Xylol/EGA

| Einbrennbedingungen | Mechanische Daten | | | | | |
|---|---|---|---|---|---|---|
| Temp./Zeit | SD | HK | HB | GS | ET | KS indirekt |
| 180 15' | 40–50 | 190 | 111 | 0 | 11,2 | > 94 |

Beispiel 5

*5a. Herstellung des blockierten Isocyanats*

Zu einer Mischung aus 174 Gew.-Teilen Toluylen-2,4-(2,6)-diisocyanat (aus 80% 2,4- und 20% 2,6-) und 300 Gew.-Teilen wasserfreiem Aceton wurden bei Raumtemperatur langsam 196 Gew.-Teile 2,4-Dimethylimidazolin, die in 500 Gew.-Teilen wasserfreiem Aceton gelöst waren, zugetropft. Nach Beendigung der 2,4-Dimethylimidazolin-Zugabe wurde 1 h auf 50°C erhitzt. Aceton wurde abdestilliert. Die letzten Reste an Aceton wurden durch Trocknung des Reaktionsproduktes bei 60°C im Vakuumtrockenschrank entfernt. Der NCO-Gehalt des blockierten TDI betrug 0,2%. Das mit 2,4-Dimethylimidazolin blockierte Diisocyanat stellt ein weißes Pulver mit einem Schmelzbereich von 85—105°C dar.

*5b. Herstellung des Klarlacks:*

Die in 5a beschriebene Verbindung wurde im äquivalenten Verhältnis mit dem in 1c beschriebenen Polyester in o-Xylol/EGA (o-Xylol: EGA = 1:3) gelöst und wie in 1c weiterbehandelt.

Rezeptur: 100 Gew.-Teile blockiertes Isocyanat aus 5a
66,6 Gew.-Teile o-Xylol/EGA
288 Gew.-Teile Polyester gemäß 1c
192 Gew.-Teile o-Xylol/EGA

| Einbrennbedingungen | Mechanische Daten | | | | | |
|---|---|---|---|---|---|---|
| Temp./Zeit | SD | HK | HB | GS | ET | KS indirekt |
| 180 5' | 40–50 | 190 | 111 | 0 | 11 | > 94 |

Beispiel 6

*6a. Herstellung des Polyesters*

2 Mol (268 g) Trimethylolpropan, 6 Mol Hexandiol-1,6 (708 g), 1 Mol (104 g) 2,2-Dimethylpropandiol-1,3, 2 Mol (292 g) Adipinsäure und 5 Mol (830 g) Isophthalsäure wurden in einem 5 l-Dreihalskolben erwärmt. Nachdem die Einsatzstoffe zum größten Teil aufgeschmolzen waren, wurde bei einer Temperatur von 160°C 0,1 Gew.-% Di-n-butylzinnoxid als Veresterungskatalysator zugegeben. Innerhalb von 3 h wurde die Sumpftemperatur langsam auf 185°C erhöht. Die weitere Temperaturerhöhung auf maximal 230°C Sumpftemperatur erfolgte innerhalb von weiteren 8 h, wobei die Aufheizgeschwindigkeit sich an der $H_2O$-Abscheidung orientierte. Der Polyester wurde anschließend

auf 210°C abgekühlt und durch Evakuieren bei ca. 1 mm Hg weitgehend von flüchtigen Anteilen befreit. Während der gesamten Kondensationszeit wurde das Sumpfprodukt verhalten gerührt. Ein trockener $N_2$-Strom von ca. 30 l/h sorgte für eine bessere Austrangung des Wassers.

| | | |
|---|---|---|
| OH-Zahl | : | 118—123 mg KOH/g |
| Säure-Zahl | : | <2 mg KOH/g |
| Schmelzbereich | : | 25—36°C |
| Glasumwandlungstemperatur (DTA) | : | −14 bis −3°C |

*6b. Herstellung des Klarlacks:*

Die in 5a beschriebene Verbindung wurde im äquivalenten Verhältnis mit dem in 6a beschriebenen Polyester in o-Xylol/EGA (o-Xylol : EGA = 1 : 3) gelöst und wie in 1c weiter-behandelt.

Rezeptur: 100 Gew.-Teile blockiertes Isocyanat aus 5a
66,6 Gew.-Teile o-Xylol/EGA
252,6 Gew.-Teile Polyester gemäß 6a
168,4 Gew.-Teile o-Xylol/EGA

| Einbrennbedingungen | Mechanische Daten | | | | | |
|---|---|---|---|---|---|---|
| Temp./Zeit | SD | HK | HB | GS | ET | KS indirekt |
| 170 15' | 35–40 | 160 | 100 | 0 | 11 | > 94 |

Beispiel 7

Das in 1b beschriebene blockierte Polyisocyanat wurde im äquivalenten Verhältnis mit dem in 6a beschriebenen Polyester in o-Xylol/EGA (o-Xylol : EGA = 1 : 3) gelöst und wie in 1c weiterbehandelt.

Rezeptur: 100 Gew.-Teile blockiertes Polyisocyanat aus 1b
66,6 Gew.-Teile o-Xylol/EGA
111 Gew.-Teile Polyester gemäß 6a
74 Gew.-Teile o-Xylol/EGA

| Einbrennbedingungen | Mechanische Daten | | | | | |
|---|---|---|---|---|---|---|
| Temp./Zeit | SD | HK | HB | GS | ET | KS indirekt |
| 180 10' | 45–50 | 175 | 100 | 0 | 11,3 | > 94 |
| 170 15' | 40–45 | 170 | 91 | 0 | 10,2 | > 94 |

Beispiel 8

*8a. Herstellung des blockierten Isocyanats:*

Zu 210 Gew.-Teilen 2,2,4- (2,4,4) Trimethylhexamethylendiisocyanat (1 : 1) wurden bei 80°C 196 Gew.-Teile 2,4-Dimethylimidazolin so zugetropft, daß die Temperatur nicht über 90°C stieg. Nach beendeter 2,4-Dimethylimidazolin-Zugabe wurde noch 1 h bei 100°C erhitzt. Der NCO-Gehalt des Reaktionsproduktes lag <0,2%. Das Reaktionsprodukt ist ein farbloses Pulver mit einem Schmelzbereich von 85—105°C.

*8b. Herstellung des Klarlacks:*

Die in 8a beschriebene Verbindung wurde im äquivalenten Verhältnis mit dem in 1c beschriebenen Polyester in o-Xylol/EGA (o-Xylol : EGA = 1 : 3) gelöst und wie in 1c weiterbehandelt.

Rezeptur: 100 Gew.-Teile blockiertes Polyisocyanat aus 8a
66,6 Gew.-Teile o-Xylol/EGA
230,3 Gew.-Teile Polyester gemäß 1c
153,3 Gew.-Teile o-Xylol/EGA

| Einbrennbedingungen | Mechanische Daten | | | | | |
|---|---|---|---|---|---|---|
| Temp./Zeit | SD | HK | HB | GS | ET | KS indirekt |
| 180 10' | 40–50 | 150 | 100 | 0 | 11,0 | > 94 |
| 170 15' | 40–45 | 145 | 91 | 0 | 10,5 | > 94 |

Die in den Tabellen benutzten Abkürzungen bedeuten:

| | | |
|---|---|---|
| SD | = Schichtdicke (in $\mu$) | |
| HK | = Härte nach König (in sec) | (DIN 53 157) |
| HB | = Härte nach Buchholz | (DIN 53 153) |
| ET | = Tiefung nach Erichsen (in mm) | (DIN 53 156) |
| GS | = Gitterschnittprüfung | (DIN 53 151) |
| KS indirekt | = Kugelschlag indirekt in cm . kg | |

**Patentansprüche**

1. Einbrennlacke auf der Basis eines Gemisches aus hydroxylgruppenhaltigen Polymeren, blockierten Polyisocyanaten und organischen Lösungsmitteln sowie gegebenenfalls üblichen Lackzusätzen, dadurch gekennzeichnet, daß sie aus

*a.* 40—70 Gew.-% hydroxylgruppenhaltigen Polymeren mit Hydroxylzahlen zwischen 40 und 240 und mit Imidazolinen der allgemeinen Formel

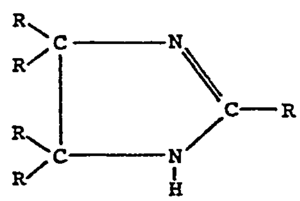

blockierte Polyisocyanate,

worin R gleiche oder verschiedene Substituenten aus der Gruppe Wasserstoff, Alkyl-, Cycloalkyl-, Aralkyl- Alkaryl und Arylrest sind, wobei die Komponenten in solcher Menge eingesetzt werden, daß auf ein Hydroxylgruppenäquivalent 0,8—1,2 NCO-Gruppenäquivalente kommen,

*b.* 0—2 Gew.% Vernetzungskatalysator und

*c.* 30—60 Gew.% organischem Lösungsmittel oder Lösungsmittelgemisch bestehen wobei sich die Prozentzahlen auf 100 addieren, sowie zusätzlich

*d.* 0—65 Gew.% Pigmenten und/oder Füllstoffen,

*e.* 0—5 Gew.% Farbstoffen und gegebenenfalls

*f.* 0,1—3 Gew.% Verlaufmittel, Glanzverbesserer, Antioxidantien und/oder Hitzestabilisatoren enthalten.

2. Einbrennlacke nach Anspruch 1, dadurch gekennzeichnet, daß das mit Imidazolinen blockierte Polyisocyanat im Falle der Diisocyanate der allgemeinen Formel

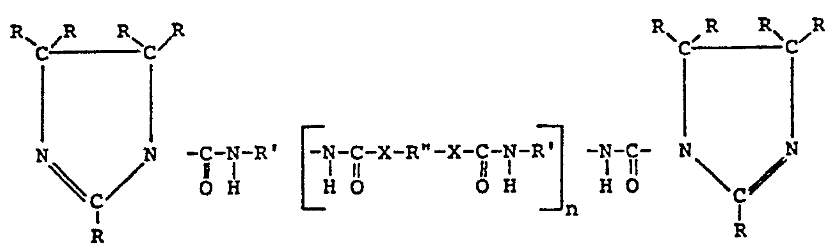

entspricht, worin n 0 oder 1, X O, S oder eine NH-Gruppe, R ein gleicher oder verschiedener Rest aus der Gruppe Wasserstoff, Alkyl-, Cycloalkyl-, Aralkyl-, Alkaryl und Arylrest, R' ein Alkylen-, Cycloalkylen- oder Arylenrest und R'' ein gegebenenfalls durch einen oder mehrere Alkylreste, wobei mehrere auch gemeinsamer Bestandteil eines cycloaliphatischen Ringes sein können, substituierter, gesättigter oder

ungesättigter Alkylenrest mit 2—18 C-Atomen, der gegebenenfalls ein oder mehrere Sauerstoffoder Schwefelatome in der Kohlenwasserstoffkette enthält, oder ein Cycloalkylenrest ist.

**Claims**

1. Baking lacquers on the basis of a blend of hydroxylgroups containing polymers, blocked polyisocyanates and organic solvents as well as, possibly, common lacquer additives, comprising that they consist of

*a.* 40 to 70 wt-% hydroxyl group containing polymers with hydroxyl numbers between 40 and 240 and polyisocyanates blocked with imidazolines of the general formula

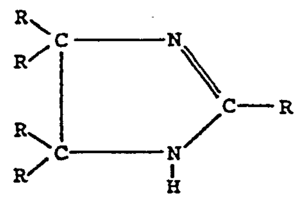

wherein R are equal or different substituents selected from the group of hydrogen, alkyl-, cycloalkyl-, aralkyl-, alkaryl- and aryl radical, whereby the components are used in such amounts that 0,8 to 1,2 NCO-group equivalents are applied to each hydroxyl group equivalent,

*b.* 0—2 wt-% cross-linking catalyst, and

*c.* 30—60 wt-% organic solvent or solvent mixture, whereby these percentages add up to 100, as well as, in addition contain

*d.* 0—65 wt-% or pigments and/or fillers,

*e.* 0—5 wt-% colorants and, possibly,

*f.* 0,1—3 wt-% flowing agents, gloss improvers, antioxidants and/or heat stabilizers.

2. Baking lacquers according to claim 1, wherein the imidazoline-blocked polyisocyanate corresponds, in the case of the di-isocyanate, to the general formula:

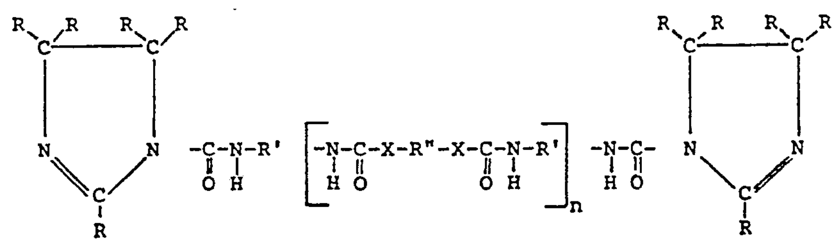

wherein n = 0 or 1, X = O, S or an NH-group, R = an equal or different radical selected from the group of hydrogen, alkyl-, cycloalkyl-, aralkyl-, alkaryl- and aryl radical; R′ = an alkylene, cycloalkylene or arylene-radical and R″ represents a substituted saturated or unsaturated alkylene radical with 2 to 18 C-atoms substituted by, possibly one or several alkyl radicals, wherein more than one can also jointly form a component of a cycloaliphatic ring; the alkylene radical may, possibly, also contain one or several oxygen- or sulfur-atoms in the hydrocarbon chain or it may be a cycloalkylene radical.

**Revendications**

1. Vernis à cuire à base d'un mélange de polymères contenant des groupes hydroxy, de polyisocyanates bloqués et de solvants organiques, ainsi qu'eventuellement d'additifs habituels pour vernis, caractérisés en ce qu'ils sont constitués de:

*a.* 40—70% en poids de polymères contenant des groupes hydroxy et ayant des indices hydroxyle se situant entre 40 et 240, ainsi que des polyisocyanates bloqués par des imidazolines répondant à la formule générale:

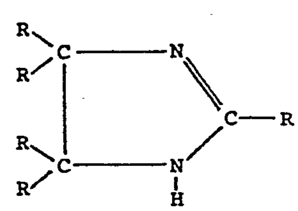

dans laquelle les radicaux R représentent des substituants identiques ou différents choisis parmi le groupe comprenant un atome d'hydrogène, un groupe alkyle, un groupe cycloalkyle, un groupe aralkyle, un groupe alcaryle et un groupe aryle, ces composants étant utilisés en une quantité calculée de telle sorte que, pour un équivalent de groupes hydroxy, on ait 0,8—1,2 équivalent de groupes NCO,

*b.* 0—2% en poids d'un catalyseur de réticulation, et
*c.* 30 à 60% en poids d'un solvant organique ou d'un mélange de solvants,
les pourcentages s'additionnant jusqu'à 100, ainsi que, en outre:
*d.* 0—65% en poids de pigments et/ou de charges,
*e.* 0—5% en poids de colorants et éventuellement
*f.* 0,1—3% en poids d'agents fluidifiants, d'agents améliorant le brillant, d'agents antioxydants et/ou de stabilisants thermiques.

2. Vernis à cuire suivant la revendication 1, caractérisés en ce que, dans le cas des diisocyanates, le polyisocyanate bloqué avec des imidazolines répond à la formule générale:

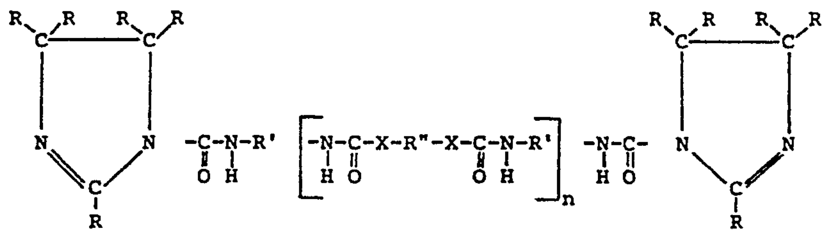

dans laquelle n représente 0 ou 1, X représente O, S ou un groupe NH, les radicaux R sont identiques ou différents et sont choisis parmi le groupe comprenant un atome d'hydrogène, un groupe alkyle, un groupe cycloalkyle, un groupe aralkyle, un groupe alcaryle et un groupe aryle, R' représente un groupe alkylène, un groupe cycloalkylène ou un groupe arylène et R'' représente un groupe alkylène saturé ou insaturé, contenant 2 à 18 atomes de carbone et éventuellement substitué par un ou plusieurs groupes alkyle (plusieurs groupes alkyle pouvant également être un constituant commun d'un noyau cycloaliphatique), ce groupe alkylène contenant éventuellement un ou plusieurs atomes d'oxygène ou de soufre dans la chaîne hydrocarbonée, ou encore R'' représente un groupe cycloalkylène.